# EUROPÄISCHE PATENTANMELDUNG

(11) **EP 0 572 714 A1**
(43) Veröffentlichungstag der Anmeldung: **08.12.1993**
(21) Anmeldenummer: 92118313.3
(22) Anmeldetag: 27.10.1992
(51) Int. Cl.: A45F 5/02, A21B 3/00

(54) **Tasche**

(30) Priorität: 05.06.1992 DE 9207628 U
(71) Anmelder: Rutz, Eugen, D-69168 Wiesloch (DE)
(72) Erfinder: Rutz, Eugen, D-69168 Wiesloch (DE)
(74) Vertreter: Naumann, Ulrich, Dr.-Ing.

(57) **Zusammenfassung**

Eine Tasche (1) mit mehreren zumindest einseitig geöffneten und/oder verschließbaren Fächern (2a-f) für einen Griffbereich und einen Wirkbereich aufweisende Werkzeuge, insbesondere für das Bäckergewerbe, bildet eine eigenständige Einheit, schränkt die Bewegungsfreiheit des Trägers so wenig wie möglich ein und gewährleistet einen sicheren Zugriff auf die Werkzeuge, indem die Tasche (1) mit mindestens einer Lasche (3) zum Durchführen eines Gürtels oder Riemens versehen ist.

## Beschreibung

Die Erfindung betrifft eine Tasche mit mehreren zumindest einseitig geöffneten und/oder verschließbaren Fächern für Werkzeuge mit einem Griffbereich und einem Wirkbereich, insbesondere für das Bäckergewerbe.

Es sind bereits verschiedene Werkzeugtaschen bekannt, die für die speziellen Erfordernisse bestimmter Berufsgruppen ausgelegt sind. Aus dem Monteurbereich sind beispielsweise Werkzeugtaschen zum Umhängen bekannt. Als weitere Möglichkeit der griffbereiten Werkzeugaufbewahrung ist es bekannt, Werkzeuge in entsprechend ausgestalteten, in die Berufskleidung integrierten Taschen aufzubewahren. Insbesondere Arbeitsoveralls weisen oftmals Taschen für Stifte, einen Zollstock, etc. auf.

Die bekannte Werkzeugtasche zum Umhängen ist in der Praxis oftmals problematisch, da sie die Bewegungsfreiheit des Trägers beeinträchtigt und sich ihre Position am Körper des Trägers durch dessen Bewegungen verändert. Dadurch ist der sichere Zugriff auf bestimmte Werkzeuge erschwert, wodurch sich beispielsweise der Zeitaufwand für bestimmte Arbeitsvorgänge erhöht.

Das Tragen von entsprechender Arbeitskleidung, die mit Werkzeugtaschen versehen ist, ist insbesondere im lebensmittelverarbeitenden Gewerbe problematisch, da hier besonders hohe Anforderungen an die Hygienebedingungen der Werkzeuge zu stellen sind. Auch ein indirekter Kontakt der Werkzeuge mit dem Träger der Werkzeuge über dessen Kleidung ist in diesem Falle zu vermeiden. Dazu kommt, daß das Tragen von Werkzeugen, wie z.B. Messern mit ungeschützter Schneide, in Taschen der Arbeitskleidung ein zu großes Verletzungsrisiko birgt.

Der Erfindung liegt daher die Aufgabe zugrunde, eine Werkzeugtasche der in Rede stehenden Art so auszugestalten und weiterzubilden, daß sie eine eigenständige Einheit bildet, die Bewegungsfreiheit des Trägers so wenig wie möglich einschränkt, und einen sicheren Zugriff auf die Werkzeuge gewährleistet.

Die erfindungsgemäße Tasche löst die voranstehende Aufgabe durch die Merkmale des Patentanspruches 1. Danach ist die eingangs genannte Tasche so ausgestaltet, daß sie mit mindestens einer Lasche zum Durchführen eines Gürtels oder Riemens versehen ist.

Erfindungsgemäß ist erkannt worden, daß das Tragen von Werkzeugtaschen insbesondere im professionellen Bereich von Vorteil ist. Wenn der Benutzer sein Werkzeug stets bei sich trägt, läßt sich die Arbeitszeit, die zum Auffinden von Werkzeug nötig ist, in engen Grenzen halten. Es ist zudem der Identifikation des Benutzers mit seiner Arbeit zuträglich, wenn jeder seinen eigenen, persönlichen Werkzeugsatz benutzt und wartet, d.h. die Verantwortung für seinen Werkzeugsatz, seine Vollständigkeit und Brauchbarkeit übernimmt. Es ist ferner erkannt worden, daß die Bewegungsfreiheit des Trägers der Werkzeugtasche, insbesondere im Arm- und Oberkörperbereich durch herkömmliche Umhängetaschen beeinträchtigt ist und daß diese Beeinträchtigung durch die erfindungsgemäße Ausgestaltung der Werkzeugtasche als Gürteltasche entfällt. Es ist schließlich erkannt worden, daß die Werkzeugtasche bei ihrer Anordnung als Gürteltasche eine weitaus ergonomischere Position bezüglich dem Träger einnimmt, so daß auch der Zugriff zu den in der Werkzeugtasche angeordneten Werkzeugen vereinfacht ist.

Die Laschen zum Durchführen eines Gürtels oder Riemens können nun fest mit der Tasche verbunden sein, beispielsweise durch Nähen und/oder mit Hilfe von Nieten, was insbesondere dann sinnvoll ist, wenn die Werkzeugtasche im bestückten Zustand ein hohes Gewicht aufweist. In diesem Falle muß eine sichere und feste Verbindung der Laschen mit der Tasche gewährleistet sein. Für andere Anwendungen, insbesondere wenn das Durchführen eines Gürtels durch die Laschen aufgrund der verwendeten Arbeitskleidung nicht ohne weiteres möglich ist, können die Laschen vorteilhaft zumindest teilweise lösbar, beispielsweise mit Hilfe von Druckknöpfen und/oder Klettverschlüssen, mit der Tasche verbunden sein. Auf diese Weise kann die Tasche auch an speziell dafür vorgesehenen Laschen an der Arbeitskleidung befestigt werden.

Von besonderem Vorteil, insbesondere im Hinblick auf einen ergonomischen Zugriff auf die Werkzeuge, ist es, wenn für jedes Werkzeug ein eigenes Fach vorgesehen ist und das Fach entsprechend dem Werkzeug dimensioniert und ausgestaltet ist, so daß das Werkzeug im wesentlichen nur in einer bevorzugten Position in dem Fach anordenbar ist. Die Zuordnung eines eigenen Faches für jedes Werkzeug hat zum einen den Vorteil, daß jedes Werkzeug immer an einer bestimmten Position der Werkzeugtasche zu finden ist. Ist außerdem jedes Fach entsprechend dem Werkzeug dimensioniert und ausgestaltet, so wird das Werkzeug zudem auch in einer ganz bestimmten, griffbereiten Position in diesem Fach gehalten. Dies vereinfacht den Zugriff auf die Werkzeuge entscheidend und damit auch den gesamten zu verrichtenden Arbeitsprozeß. Wesentlich ist auch, daß jedes Fach individuell, entsprechend dem Werkzeug ausgestaltet ist. D.h. zum einen, daß eine etwaige Verletzungsgefahr beim Tragen, die von spitzen und/oder scharfen Werkzeugen ausgeht, durch eine entsprechende Versteifung oder auch Polsterung o.ä. des entsprechenden Faches ausgeräumt werden kann. Zum anderen kann mit einer auf das Werkzeug abgestimmten Ausgestaltung des Faches einer Beschädigung des Werkzeugs vorgebeugt werden. Von besonderem Vorteil ist es, wenn die Fächer auch so dimensioniert sind, daß der Wirkbereich der Werkzeuge zumindest teilweise in den Fächern anordenbar ist, während der Griffbereich der Werkzeuge zumindest teilweise aus den Fächern herausragt. Dies trägt zusätzlich zur Verringerung einer etwaigen Unfallgefahr bei. Auch aus ergonomischen Gesichtspunkten ist eine solche Dimensionierung der Fächer sinnvoll, da ein an die Entnahme eines Werkzeugs anschließendes Drehen oder Suchen einer Arbeitshaltung des Werkzeugs entfällt.

Die Halte- und Schutzfunktion eines Faches der erfindungsgemäßen Werkzeugtasche kann vorteilhaft dadurch erhöht werden, daß das Fach eine Metallverstärkung aufweist, die beispielsweise auch eine Klemmwirkung auf ein in dem Fach angeordnetes Werkzeug ausübt. Eine solche Ausgestaltung empfiehlt sich insbesondere für Messerfächer, da dadurch zum einen die Verletzungsgefahr des Trägers der Werkzeugtasche durch ein zufälliges Herausfallen des Messers verringert wird und zum anderen die Schneide des Messers geschützt wird.

Da die einzelnen Fächer der Werkzeugtasche funktionsgemäß durch häufiges Einfügen und Herausziehen von Werkzeugen stark beansprucht werden, ist es vorteilhaft, daß die die Tasche bildenden Fächer aus mehreren Einzelteilen gebildet sind und daß die Begrenzungen der einzelnen Fächer sowie die Verbindungen der Einzelteile mit Hilfe von Nieten verstärkt sind. Da ein Benutzer oftmals auch in einer Arbeitsumgebung private Gegenstände bei sich tragen wird, wie z.B. einen Schrankschlüssel, und in vielen Arbeitskleidungen keine entsprechenden Taschen vorgesehen sind, ist es zweckmäßig, bei der erfindungsgemäßen Werkzeugtasche mindestens ein Fach vorzusehen, das beispielsweise mit Hilfe eines Reißverschlusses und/oder von Druckknöpfen verschließbar ist. Um die Zuordnung einer Tasche zu ihrem Träger zu erleichtern, ist es außerdem vorteilhaft jede Werkzeugtasche mit Indentifikationsmitteln, beispielsweise in Form eines Namensschildes oder eines Symbols, für den Träger der Tasche auszustatten. Die erfindungsgemäße Tasche kann vorteilhaft zumindest teilweise aus Stoff, Kunststoff und/oder Leder gefertigt sein, je nach Arbeitsumgebung und persönlichen Erfordernissen.

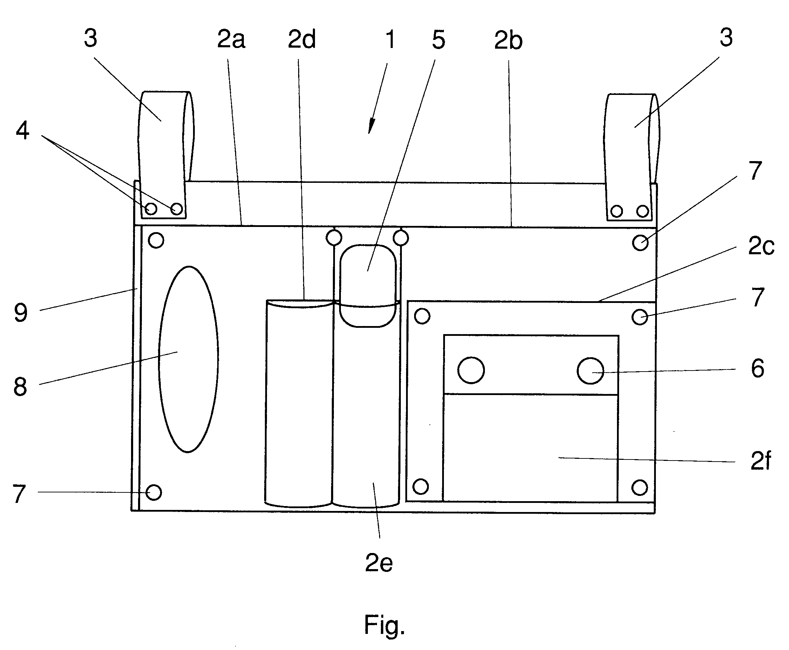

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt die einzige Figur die Darstellung einer erfindungsgemäßen Werkzeugtasche, insbesondere für das Bäckergewerbe.

Die in der einzigen Figur gezeigte Tasche 1 weist in ihrem oberen Bereich zwei Laschen 3 auf, die mit Hilfe von Nieten 4 mit der Tasche 1 fest, unlösbar verbunden sind. Durch diese Laschen 3 ist beispielsweise ein Gürtel führbar, mit dem die Tasche 1 um die Taille oder Hüfte eines Trägers geschnallt getragen werden kann. Die Tasche 1 weist mehrere Fächer 2a bis 2f unterschiedlicher Dimensionierung und teilweise unterschiedlichen Materials auf. Die Tasche ist aus mehreren Einzelteilen zusammengenäht. Die Begrenzungen der einzelnen Fächer 2a bis 2f sind teilweise ebenfalls als Nähte ausgebildet. Sowohl die Verbindungen der Einzelteile als auch die Begrenzungen der einzelnen Fächer sind zumindest teilweise mit Hilfe von Nieten 7 verstärkt. Diese tragen vorteilhaft zur Stabilität der gesamten Tasche bei. Die Tasche 1 weist ferner ein in der Fig. schematisch dargestelltes Identifikationsmittel 8 auf, das beispielsweise durch ein Namensschild oder ein Symbol oder Zeichen, das auf den Benutzer hinweist, gebildet sein kann.

Die Tasche 1 ist durch eine nicht näher bezeichnete Rückwand gebildet, die gegen den Körper des Trägers der Tasche 1 orientiert ist. Auf dieser nicht näher bezeichneten Rückwand sind weitere Einzelteile der Tasche 1 aufgenäht bzw. genietet. Diese bilden zusammen mit der Rückwand und etwaigen Seitenwandabschnitten die Fächer 2a bis 2f. Das Fach 2a ist einseitig mit einer Seitenwand 9 versehen, so daß die Tasche im wesentlichen ein dreieckiges Öffnungsprofil aufweist. In dieser Tasche wird vorzugsweise ein Muldenbesen aufbewahrt, dessen Besenkörper gegen die Seitenwand 9 gerichtet ist und dessen Borsten sich in die andere, spitz zulaufende Richtung des Öffnungsprofils erstrecken. Der Muldenbesen ragt teilweise nach oben aus dem Fach 2a heraus und kann so jederzeit an seinem Besenkörper ergriffen werden. Das Fach 2b ist vollständig flach für einen Kunststoffteigschaber ausgebildet, der ebenfalls teilweise nach oben aus dem Fach 2b herausragt. Bei der Tasche 1 ist ein weiteres Fach 2c für einen Teigschaber vorgesehen, der jedoch aus Metall gefertigt ist und mit einem Griff versehen ist. Das Fach 2c ist ebenfalls flach ausgebildet, jedoch in seiner Tiefe so dimensioniert, daß der Griff des Teigschabers nach oben aus dem Fach 2c herausragt. Auf dem Fach 2c ist ein weiteres flach ausgebildetes Fach 2f angeordnet, das mit Hilfe einer mit Druckknöpfen versehenen Lasche verschließbar ist. In diesem Fach kann beispielsweise ein Schrankschlüssel während der Arbeitszeit aufbewahrt werden. Es ist ferner ein Fach 2d für Schreibgeräte vorgesehen. Dieses Fach 2d kann nach unten sowohl geschlossen als auch offen sein, wenn das Schreibgerät mit einer entsprechenden Klammer versehen ist. Die Tasche 1 weist schließlich noch ein Fach 2e auf, das mit einer Metallverstärkung 5 versehen ist. Diese Metallverstärkung 5 besteht aus einem gebogenen Innenblech, das sich über die gesamte Länge des Fachs 2e erstreckt und dieses nach unten hin abschließt. Die Metallverstärkung 5 übt ferner eine Klemmwirkung auf die Öffnung des Faches 2e aus bzw. auf ein in dieses Fach eingeführtes Werkzeug. Dieses Fach 2e ist für ein Messer mit ungeschützter Schneide vorgesehen und dient sowohl als eine Art Scheide für die Messerklinge, also zum Schutze dieser, als auch zum Schutz des Trägers der Tasche 1.

Schließlich sei hervorgehoben, daß die erfindungsgemäße Lehre durch das voranstehende Ausführungsbeispiel lediglich erläutert, jedoch keinesfalls eingeschränkt ist. Vielmehr läßt sich die erfindungsgemäße Lehre auch bei Taschen realisieren, die andere bzw. weitere Werkzeuge als die oben genannten aufnehmen sollen.

## Patentansprüche

1. Tasche (1) mit mehreren zumindest einseitig geöffneten und/oder verschließbaren Fächern (2a-f) für einen Griffbereich und einen Wirkbereich aufweisende Werkzeuge, insbesondere für das Bäckergewerbe,
**dadurch gekennzeichnet**, daß die Tasche (1) mit mindestens einer Lasche (3) zum Durchführen eines Gürtels oder Riemens versehen ist.

2. Tasche nach Anspruch 1, dadurch gekennzeichnet, daß die Lasche (3) fest mit der Tasche (1) verbunden ist.

3. Tasche nach Anspruch 2, dadurch gekennzeichnet, daß die Verbindung zwischen der Lasche (3) und der Tasche (1) durch Nähen und/oder mit Hilfe von Nieten (4) gebildet ist.

4. Tasche nach Anspruch 1, dadurch gekennzeichnet, daß die Lasche (3) zumindest teilweise, vorzugsweise mit Hilfe von Druckknöpfen und/oder Klettverschlüssen, lösbar mit der Tasche (1) verbunden ist.

5. Tasche nach einem der Ansprüche 1 bis 4, dadurch gekennzeichnet, daß für jedes Werkzeug ein eigenes Fach (2a-e) vorgesehen ist und daß das Fach (2a-e) entsprechend dem Werkzeug dimensioniert und ausgestaltet ist, so daß das Werkzeug im wesentlichen nur in einer bevorzugten Position in dem Fach (2a-e) anordenbar ist.

6. Tasche nach Anspruch 5, dadurch gekennzeichnet, daß das Fach (2a-e) so dimensioniert und ausgestaltet ist, daß der Wirkbereich des Werkzeugs zumindest teilweise in dem Fach (2a-e) anordenbar ist während der Griffbereich des Werkzeugs zumindest teilweise aus dem Fach (2a-e) herausragt.

7. Tasche nach einem der Ansprüche 1 bis 6, dadurch gekennzeichnet, daß mindestens ein Fach (2e) zumindest teilweise mit einer Metallverstärkung (5) versehen ist und daß die Metallverstärkung (5) vorzugsweise so ausgebildet ist, daß sie eine Klemmwirkung auf ein in dem Fach (2e) angeordnetes Werkzeug ausübt.

8. Tasche nach einem der Ansprüche 1 bis 7, dadurch gekennzeichnet, daß die Tasche (1) bzw. die die Tasche (1) bildenden Fächer (2a-f) aus mehreren Einzelteilen gebildet ist/sind und daß die Begrenzungen der einzelnen Fächer (2a-f) und/oder die Verbindungen der Einzelteile mit Hilfe von Nieten (7) verstärkt sind.

9. Tasche nach einem der Ansprüche 1 bis 8, dadurch gekennzeichnet, daß mindestens ein Fach (2f), insbesondere mit Hilfe eines Reißverschlusses und/oder von Druckknöpfen (6), verschließbar ist.

10. Tasche nach einem der Ansprüche 1 bis 9, dadurch gekennzeichnet, daß Identifikationsmittel (8) vorgesehen sind und daß sie vorzugsweise zumindest teilweise aus Stoff, Kunststoff und/oder Leder gefertigt ist.
